# EUROPEAN PATENT APPLICATION

(11) **EP 4 270 289 A1**
(43) Date of publication of application: **01.11.2023**
(21) Application number: 22170823.3
(22) Date of filing: 29.04.2022
(51) Int. Cl.: G06Q 20/40, H04L 9/00, G06Q 20/02

(54) **METHOD, APPARATUS, SYSTEM, AND COMPUTER PROGRAM FOR PROCESSING DATA RELATED TO DIGITAL ASSET**

(71) Applicant: Utopia Music AG, 6300 Zug (CH)
(72) Inventor: Wahlgren, Linus, 6300 Zug (CH); Flach, Max, 6300 Zug (CH); Kincy, Trevor, 6300 Zug (CH)
(74) Representative: MERH-IP Matias Erny Reichl Hoffmann Patentanwälte PartG mbB

(57) **Abstract**

Method, apparatus, system, and computer program for processing data related a digital asset. The computer-implemented method for processing data related to a digital asset, comprising the steps of minting (102, 106), using a blockchain service, non-fungible tokens, NFTs into a blockchain, wherein each NFT represents one share of a digital asset and comprises an issuing client public digital wallet identifier of a digital wallet of an issuing client; and for each minted NFT, storing (104, 106), off the blockchain, by a trusted party, issuing client information related to the issuing client, said issuing client information being only known by the trusted party.

## Description

### FIELD

Various embodiments relate to a computer-implemented method, apparatus, system, and computer program for processing data related to a digital asset.

### BACKGROUND

Non-fungible tokens, or NFTs for short, are emerging. They provide a way for private individuals to own and trade assets using a decentralized blockchain with fewer regulatory hurdles to overcome. For example, all data written to the blockchain is publicly available for anyone with access to the Internet making it an unsuitable place to store any confidential information about the owner. All financial transactions are done using crypto currencies, which brings risks impeding the adoption. Moving current closed management platforms to the blockchain provides massive challenges and risks that institutions and content owners are not willing to take. Moreover, the blockchain also uses tremendous amounts of energy, is slow, expensive to write to, and not ecological.

When it comes to digital assets, with associated intellectual property rights such as copyrights, there is no proper way to evaluate and validate the veracity of who has minted an NFT for current NFTs, nor does the NFT serve as a viable vehicle to work with current infrastructures around payments; especially when it concerns fiat payments. For example, when the digital asset is a music asset, there is also a lack of interoperability with music players and Digital Service Providers (DSP). With everyone in the blockchain music space seeking to create their own unique systems, no one is focusing on creating value that is platform agnostic and works within the current and future states of the Music Industry which gives real ownership of asset.

Therefore, there is a need to overcome all these drawbacks and to provide a solution for NFT transactions to validate the identity of an owner of a digital asset, which provides alternative distribution method for any artist, and a royalty payment interoperability with current banking standards.

Thereto, the present disclosure provides a computer-implemented for processing data related to a digital asset comprising the steps of minting, using a blockchain service, non-fungible tokens, NFTs into a blockchain, wherein each NFT represents one share of a digital asset and comprises an issuing client public digital wallet identifier of a digital wallet of an issuing client; and, for each minted NFT, storing off the blockchain, by a trusted party, issuing client information related to the issuing client, said issuing client information being only known by the trusted party.

According to another aspect of the present disclosure, the computer-implemented method may comprise the steps of receiving a transaction event related to a specific NFT; retrieving, from the blockchain service, an up-to-date public digital wallet identifier of the specific NFT; retrieving, off the blockchain, up-to-date client confidential information matching the up-to-date public digital wallet identifier; and responding to the transaction event based on the up-to-date client confidential information.

According to another aspect of the disclosure, the blockchain service may be open for direct access bypassing the trusted party enabling that the issuing client public digital wallet identifier, prior to the retrieving the up-to-date public digital wallet identifier of the specific NFT, has been replaced with the up-to-date public digital wallet identifier in a blockchain operated by the blockchain service as a result of an ownership change of the specific NFT.

According to another aspect of the disclosure, the step of minting may comprise receiving from the blockchain service a transaction receipt including a unique identifier of the NFT; and forwarding the unique identifier of the NFT to the digital wallet of the issuing client.

According to any of the aspect of the disclosure, the method may further comprise storing off the blockchain, by the trusted party, trading client confidential information related to the trading client, the trading client confidential information being only known by the trusted party.

According to another aspect of the disclosure, the method may comprise, prior to the step of storing the trading client confidential information, the steps of receiving a registration request from the trading client, the registration request comprising the trading client confidential information, and a trading client digital signature; verifying the trading client digital signature; and if the trading client digital signature passes the verifying, proceeding to the storing the trading client confidential information.

According to another aspect of the disclosure, the trading client digital signature may be created with a trading client secret key of the trading client, and the trading client digital signature may be verified with a trading client public key of the trading client.

According to another aspect of the disclosure, the digital asset may comprise one more of a copyrighted work, a musical piece identified by an international standard recording code, a digital art, an in-game asset of a computer game, a video, an ownership of a physical asset, a financial asset.

According to another aspect of the disclosure, the transaction event may comprise one or more of a financial transaction, a royalty event, a recurring transaction event.

According to another aspect of the disclosure, off the blockchain may comprise using a database for storing confidential information.

The disclosure also provides a data processing apparatus comprising one or more processors configured to cause performance of the data processing apparatus, one or more microprocessors configured to execute instructions to cause performance of the data processing apparatus, a data processing algorithm off blockchain for carrying out the method.

The disclosure also provides a system adapted to cooperate with a blockchain service for processing an NFT transaction from a seller to a buyer on one hand, and adapted to cooperate with a trusted party to process payment related to said NFT transactions, said system and said trusted party being outside the blockchain service, wherein the system comprises the data processing apparatus, and wherein the trusted party is able to authenticate and validate NFT transactions using information relating to the ownership the buyer of the NFT from the blockchain service.

According to another aspect of the disclosure, the system and the trusted party may be a same entity, from which digital assets' owners are able to register, mint NFTs, and receive transaction payment after authentication and validation of their ownership from available information on the blockchain service.

The present disclosure also provides a computer program comprising instructions which, when the program is executed by a computer, cause the computer to carry out the method as disclosed.

One or more examples of implementations are set forth in more detail in the accompanying drawings and the description of embodiments.

### LIST OF DRAWINGS

Some embodiments will now be described with reference to the accompanying drawings, in which
FIG. 1 is a flow chart illustrating embodiments of a computer-implemented method for processing data related to a digital asset;
FIG. 2 illustrates embodiments of a data processing apparatus implementing the method; and
FIG. 3, FIG. 4, and FIG. 5 are signal sequence charts illustrating further embodiments of the method.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

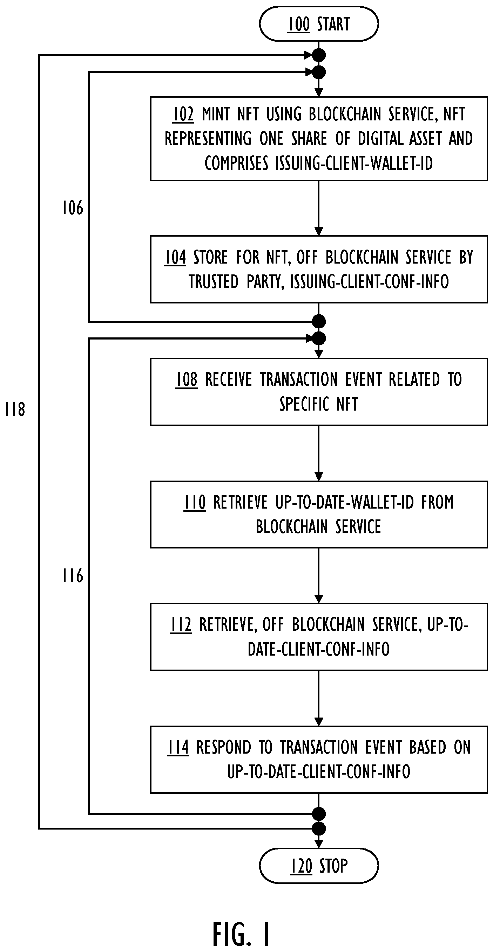

FIG. 1 illustrates an embodiment of a computer-implemented method for processing data related to a digital asset.

The method starts in a step 100 and ends in a step 120.

The operations are not strictly in chronological order in FIG. 1, and some of the operations may be performed simultaneously or in an order differing from the given ones. Other functions may also be executed between the operations or within the operations and other data exchanged between the operations. Some of the operations or part of the operations may also be left out or replaced by a corresponding operation or part of the operation. It should be noted that no special order of operations is required, except where necessary due to the logical requirements for the processing order.

In a step 102, non-fungible tokens, NFTs, are minted into a blockchain using a blockchain service. Each NFT represents one share of a digital asset and comprises an issuing client public digital wallet identifier of a digital wallet of an issuing client.

The digital asset may be a copyrighted work, a musical piece identified by an international standard recording code, a digital art, an in-game asset of a computer game, a video, an ownership of a physical asset (such as a real estate), or a financial asset, for example.

The method comprises a step 104 of issuing client confidential information related to the issuing client wherein said client confidential information is stored for each minted NFT off the blockchain by a trusted party. The issuing client confidential information is only known by the trusted party.

A loop 106 causes that the operations relating to steps 102 and 104 may be repeated as needed to mint a plurality of different NFTs.

In an embodiment, to implement a stricter KYC (know your customer) -procedure, a verification step may be performed as follows prior to the minting 102:
- receiving a minting request from the issuing client, the minting request comprising the issuing client public digital wallet identifier, the issuing client confidential information, and an issuing client digital signature;
- verifying the issuing client digital signature; and
- if the issuing client digital signature passes the verifying, proceeding to the minting 102.

In another embodiment, the issuing client digital signature is created with an issuing client secret key of the issuing client, and the issuing client digital signature is verified with an issuing client public key of the issuing client. The pair of keys, i.e., the secret key known only by the user, and the public key known by others, utilizes a well-known public-key (or asymmetric) cryptography.

In a step 108, a transaction event related to a specific NFT is received.

In a step 110, an up-to-date public digital wallet identifier of the specific NFT is retrieved from the blockchain service.

In a step 112, up-to-date client confidential information matching the up-to-date public digital wallet identifier is retrieved off the blockchain.

In a further step 114, the transaction event is responded to based on the up-to-date client confidential information.

The transaction event may be a financial transaction, a royalty event, or a recurring transaction event, for example. The confidential information may be sensitive data such as a bank account number of the owner of the NFT. The described processing enables that the confidential information is hidden from the blockchain, increasing the data privacy and data security. Thus, information off blockchain is muted, not available in the blockchain service. It will be well understood that it might be confidential data or any other type of data not to be shared or known from blockchain services, to be only available at the trusted party.

A loop 116 causes that the operations relating to steps 108, 110, 112, and 114 are repeated as needed to process a plurality of different transaction events.

A loop 118 causes that even after the operations 108, 110, 112, and 114, additional different NFTs may be minted as needed.

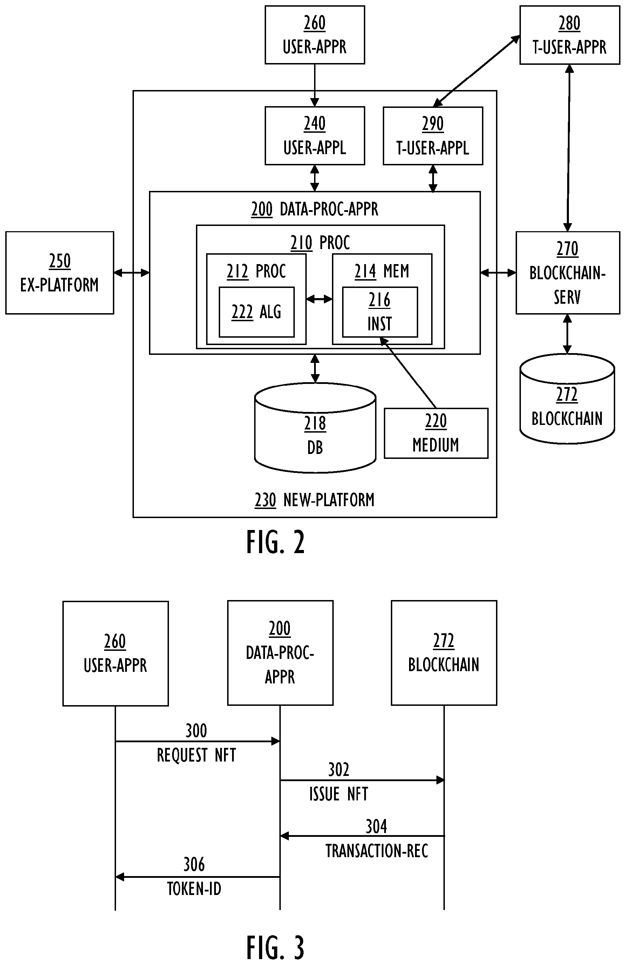

As shown in FIG. 2, a new platform 230 is adapted to cooperate with a blockchain service 270, 272 on one hand, and an existing platform 250, such as an aggregator data system adapted to interact with the new platform 230 on the other hand, and more precisely a data processing apparatus 200 relating to the transaction events.

The new platform 230 comprises the data processing apparatus 200 implementing the method as a data processing algorithm 222, The data processing apparatus 200 comprises one or more processors 210 configured to cause performance of the data processing apparatus 200.

In an embodiment, the one or more processors 210 comprise one or more memories 214 including computer program comprising instructions 216, and one or more microprocessors 212 configured to execute the instructions 216 to cause performance of the data processing apparatus 200.

In an embodiment, the one or more processors 210 comprise a circuitry configured to cause the performance of the data processing apparatus 200.

Consequently, the data processing apparatus 200 may be implemented as one or more physical units, or as a service implemented by one or more networked server apparatuses. The physical unit may be a computer or another type of a general-purpose off-the-shelf computing device, as opposed to a purpose-build proprietary equipment, whereby research & development costs will be lower as only the special-purpose software (and not the hardware) needs to be designed, implemented, and tested. However, if highly optimized performance is required, the physical unit may be implemented with proprietary integrated circuits. The networked server apparatus may be a networked computer server, which operates according to a client-server architecture, a cloud computing architecture, a peer-to-peer system, or another applicable distributed computing architecture.

A non-exhaustive list of implementation techniques for the microprocessor 212 and the memory 214, or the circuitry, includes, but is not limited to: logic components, standard integrated circuits, application-specific integrated circuits (ASIC), system-on-a-chip (SoC), application-specific standard products (ASSP), microprocessors, microcontrollers, digital signal processors, special-purpose computer chips, field-programmable gate arrays (FPGA), and other suitable electronics structures.

The term 'memory' 214 refers to a device that is capable of storing data run-time(working memory) or permanently (non-volatile memory). The working memory and the non-volatile memory may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

The computer program (or software) may be written by a suitable programming language (such as C, C++, assembler or machine language, for example), and the resulting executable code comprising the instructions 216 may be stored in the memory 214 and run by the microprocessor 212. The computer program implements the method as the algorithm 222. The computer program code may be in source code form, object code form, executable form, or in some intermediate form, but for use in the one or more microprocessors 212 it is in the executable form. There are many ways to structure the computer program: the operations may be divided into modules, sub-routines, methods, classes, objects, applets, macros, etc., depending on the software design methodology and the programming language used. In modern programming environments, there are software libraries, i.e., compilations of ready-made functions, which may be utilized by the computer program for performing a wide variety of standard operations. In addition, an operating system (such as a general-purpose operating system or a real-time operating system) may provide the computer program with system services.

An embodiment provides the computer program comprising the instructions 216 which, when the computer program is executed by a computer, cause the computer to carry out the method. An alternative embodiment provides a computer-readable medium 220 storing the computer program comprising the instructions 216, which, when loaded into the one or more processors 212 and executed by the one or more processors 212, causes the one or more processors 212 to perform the method. The computer-readable medium 220 may comprise at least the following: any entity or device capable of carrying the computer program to the one or more processors 212, a record medium, a computer memory, a read-only memory, an electrical carrier signal, a telecommunications signal, and a software distribution medium. In some jurisdictions, depending on the legislation and the patent practice, the computer-readable medium 220 may not be the telecommunications signal. In an embodiment, the computer-readable medium 220 is a computer-readable storage medium. In an embodiment, the computer-readable medium 220 is a non-transitory computer-readable storage medium.

The data processing apparatus 200 may be operated by a trusted third party acting as a service provider.

The blockchain service 270 is open for direct access bypassing the trusted party. This enables that the issuing client public digital wallet identifier, prior to the retrieving in 110 the up-to-date public digital wallet identifier of the specific NFT, has been replaced with the up-to-date public digital wallet identifier in the blockchain 272 operated by the blockchain service 270 as a result of an ownership change of the specific NFT. In this way, the blockchain service 270 is only used to record the ownership or an ownership change of the specific NFT. The transaction events do not cause any need to write into the blockchain 272. Processing off the blockchain saves processing time and resources as compared to the processing the blockchain 272.

Let us next study FIG. 3, FIG. 4, and FIG. 5, which, in connection with the environment illustrated in FIG. 2 illustrate further embodiments of the method.

As shown in FIG. 2, a user apparatus 260 interacts, via a special user application 240, with the data processing apparatus 200 in the role of the issuing client.

A blockchain service 270 maintains the blockchain 272 and serves the data processing apparatus 200.

The described solution uses a hybrid approach that leverages both the blockchain 272 and off the blockchain in tandem. Sensitive information such as the owners legal and banking information are kept out of the blockchain 270/272, in a secure database (not shown), whilst the proof of ownership is tied to the NFT.

Information regarding the ownership of the digital asset is for example stored a database 218 of the new platform 230 at the registration of the digital asset of the owner, while sensitive data such as banking data is stored in a database of the trusted party outside the new platform 230.

In another embodiment, the new platform belongs to the trusted party, and thus the database with information on the owner of the digital asset and the database comprising sensitive information of the owner may be either be a same database or two distinct databases within the new platform 230. Therefore, the new platform or system and the trusted party are a same entity, from which digital assets owners are able to register and mint NFTs. The trusted party can either process the payment directly or request a financial service to proceed with the payment after authentication and validation of the owner of the NFT requesting the payment.

The only transactions made to the blockchain 272 are the creation (or minting) of the NFT, and reading the current token owner when information is requested. This reduces advantageously the transaction costs and risks substantially, only the write actions to the blockchain 272 are slow and may require a payment.

The NFTs are minted by a new platform 230 as shown in FIG. 2 using a smart contract. The token mechanics allow the token holders to freely transfer ownership of their tokens on the blockchain 272. This enables open trading of the token and subsequently a pay-out associated with the token.

The owner of the NFT will go to a special landing page where the owner completes the KYC process - if any - and enters payment details to enable collection of the revenue. The information entered by the owner is signed using the blockchain wallet secret key of the owner. This signature is then verified by the new platform 230 and, if the verification step is successful, the information is stored off the blockchain.

When a payment is to be made by the existing platform 250 to a holder of the NFT, the new platform 230 looks up the wallet that is currently in possession of the NFT. Then the private payment information of the owner is fetched from off the blockchain and used to complete the transaction.

This solution may advantageously easily be integrated into the existing platforms 250 and in any other blockchain service, that currently only facilitate normal fiat money- or legal tender, as opposed to cryptocurrencies- payments and keep all ownership and customer data lor any other data the owner desires to be hidden or muted, locally off the blockchain for example stored in a database of the trusted party. The new platform 230 acts as a proxy to the blockchain world enabling content owners to turn parts or entire copyrights into NFTs that may be sold or given away to anyone. This enables both traditional and blockchain payments to be performed on the same asset.

Finally, the low reliance on the blockchain technology reduces the adoption barrier, operating costs and the environmental impact of the solution as compared to pure blockchain approaches.

FIG. 3 illustrates an example sequence of minting 102 the NFT. First, the user apparatus 260, using the user application 240, requests in a step 300 an NFT for a share. The data processing apparatus 200 issues in a step 302 a new NFT with the blockchain service 270, into the blockchain 272. Next, the data processing apparatus 200 receives in a step 304 a transaction receipt including a unique identifier of the NFT. Finally, the data processing apparatus 200 forwards in a step 306 the unique identifier of the NFT to the digital wallet of the issuing client via the user apparatus 260.

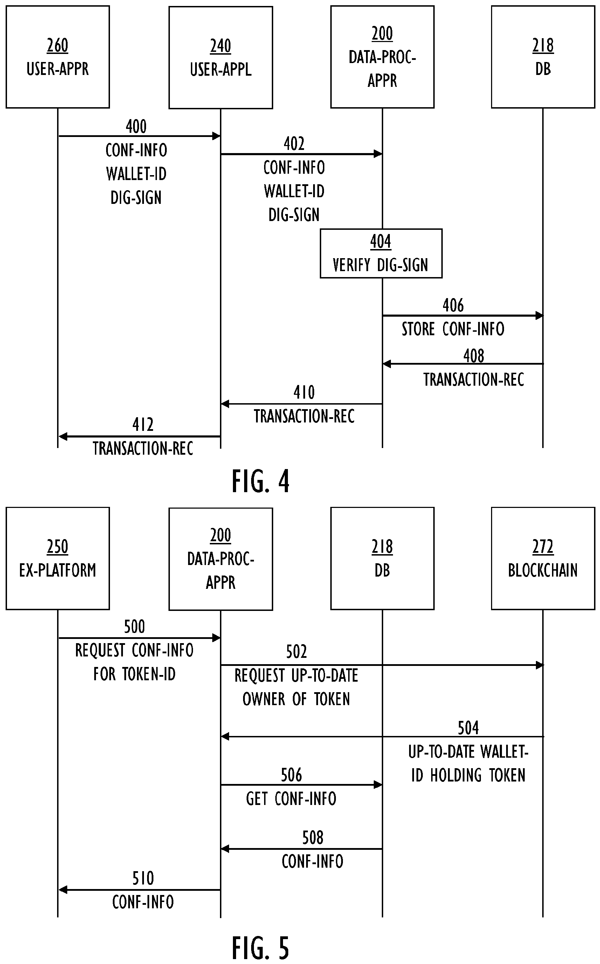

FIG. 4 illustrates an example sequence of storing 104 the confidential information.

The user apparatus 260 inputs in a step 400 confidential information to the user application 240. The user application transfers in a step 402 the confidential information to the data processing apparatus 200. The data processing apparatus 200 stores in a step 406 the confidential information off the blockchain. A transaction receipt is then passed in in steps 408, 410, 412 via the data processing apparatus 200 and the user application 240 to the user apparatus 260, wherein the transaction receipt may be stored in a digital wallet owned by a user of the user apparatus 260.

Note that the step of storing the confidential information relates to the issuing client.

However, as shown in FIG. 2, besides the user apparatus(es) 260 of the issuing client(s), user apparatuses 280 of trading clients contain user applications 290, with which confidential information related to the trading client may be stored.

In an embodiment, the method further comprises storing off the blockchain, by the trusted party, trading client confidential information related to the trading client, the trading client confidential information being only known by the trusted party. In an auxiliary embodiment, the method further comprises, prior to the storing the trading client confidential information:
- receiving a registration request from the trading client, the registration request comprising the trading client confidential information, and a trading client digital signature;
- verifying the trading client digital signature; and
if the trading client digital signature passes the verifying, proceeding to the storing the trading client confidential information.

In an embodiment, the trading client digital signature is created with a trading client secret key of the trading client, and the trading client digital signature is verified with a trading client public key of the trading client.

FIG. 5 illustrates an example sequence of processing 108, 110, 112, 114 the transaction event.

The existing platform 250 requests in a step 500 confidential information for a specific NFT.

The data processing apparatus requests in a step 502 an up-to-date owner of the specific NFT from the blockchain 272, possibly using the blockchain service 270.

The blockchain 272 returns in a step 504 the up-to-date public digital wallet identifier of the specific NFT.

The data processing apparatus retrieves 506, 508 up-to-date client confidential information matching the up-to-date public digital wallet identifier from off the blockchain, and responds in a step 510 to the transaction event based on the up-to-date client confidential information.

Thanks to the present solution, an artist, or a label is able to upload a new song to the aggregator or via the new platform and is provided with an option to mint an NFT via the platform. Once registered into the new platform, data of the owner and its digital asset are stored in the database 218 of the platform. The artist or label may decide to sell a percentage of its copyright via the NFT, and thus determines how many shares are to be minted, with associated initial pricing. The NFT may then be sold on an established market, for example Open Sea. When the NFT is sold, it is connected to the buyer's Wallet, who can then claim the NFT via the platform. Ownership data of the buyer are read from the blockchain service and updated in the database 218 of the platform off the blockchain. Royalties are advantageously paid based on the percentage of ownership via the Aggregator connection. Consumption data determines the total amount to be paid for an asset, for which royalties payment can be made using available updated data on the platform. Each owner of the digital asset is provided with royalties corresponding to the corresponding share owned.

When the NFT is sold again, a new Buyer will have to claim again the NFT via the platform. The payment is advantageously made off chain with authentication of ownership provided by the blockchain service. This provides the advantage to avoid gas fees linked to the blockchain system which sometimes are very expensive for small transaction, and which may sometimes be more expensive than the payment to be duly paid to the seller. Therefore, an artist can get recurrent royalties, or a shareholder can get dividends relating to his shares without the drawbacks of the blockchain service.

According to the disclosure, a new payment method for digital asset transactions using a blockchain marketplace is thus provided, wherein the blockchain service is used to process transfer of ownership, and wherein effective payment is provided by a trusted party after authentication off the blockchain.

Advantageously, this solution may use the ERC-721 token for the purposes of minting, validation and cross-functional checks and balances with the centralised database(s) from the new platform and for example existing music aggregators when digital asset is a song. The system takes advantage of the ERC-721 token as a data transit, ownership verification and authenticity verification vehicle.

The token may act as a KYC identifier/validator for Artists, making it impossible for fake artists to enter the market from the new platform end due when cryptographic hash and claiming process are for example within the new platform. Since the NFT rides on a smart contract, the aggregator automatically sends royalty payments based on the number of shares to the stakeholders of the NFT, fundamentally changing the asset class of what an NFT can and should be, and furthermore having true ownership of an asset.

Thanks to the disclosure, payment of royalties or dividends, i.e., recurrent payment of a copyrighted digital asset, either totally minted or minted in part, can be processed easily when it comes to NFTs.

Even though the invention has been described with reference to one or more embodiments according to the accompanying drawings, it is clear that the invention is not restricted thereto but can be modified in several ways within the scope of the appended claims. All words and expressions should be interpreted broadly, and they are intended to illustrate, not to restrict, the embodiments. It will be obvious to a person skilled in the art that, as technology advances, the inventive concept can be implemented in various ways.

## Claims

1. A computer-implemented method for processing data related to a digital asset, comprising the steps of:
minting (102, 106), using a blockchain service, non-fungible tokens, NFTs, into a blockchain, wherein each NFT represents one share of a digital asset and comprises an issuing client public digital wallet identifier of a digital wallet of an issuing client; and,
for each minted NFT, storing (104, 106), off the blockchain, by a trusted party, issuing client information related to the issuing client, said issuing client information being only known by the trusted party.

2. Computer-implemented method according to claim 1, wherein the method comprises the steps of:
receiving (108) a transaction event related to a specific NFT;
retrieving (110), from the blockchain service, an up-to-date public digital wallet identifier of the specific NFT;
retrieving (112), off the blockchain, up-to-date client confidential information matching the up-to-date public digital wallet identifier; and
responding (114) to the transaction event based on the up-to-date client confidential information.

3. Computer-implemented method according to claim 2, wherein the blockchain service is open for direct access bypassing the trusted party enabling that the issuing client public digital wallet identifier, prior to the retrieving (110) the up-to-date public digital wallet identifier of the specific NFT, has been replaced with the up-to-date public digital wallet identifier in a blockchain operated by the blockchain service as a result of an ownership change of the specific NFT.

4. Computer-implemented method according to any of the preceding claim, wherein the step of minting (102, 106) comprises:
receiving from the blockchain service a transaction receipt including a unique identifier of the NFT; and
forwarding the unique identifier of the NFT to the digital wallet of the issuing client.

5. Computer-implemented method according to any of the preceding claim, further comprising the steps of:
storing off the blockchain, by the trusted party, trading client confidential information related to the trading client, the trading client confidential information being only known by the trusted party.

6. Computer-implemented method according to claim 5, wherein the method comprises, prior to the step of storing the trading client confidential information, the steps of:
receiving a registration request from the trading client, the registration request comprising the trading client confidential information, and a trading client digital signature;
verifying the trading client digital signature; and
if the trading client digital signature passes the verifying, proceeding to the storing the trading client confidential information.

7. Computer-implemented method according to claim 6, wherein the trading client digital signature is created with a trading client secret key of the trading client, and the trading client digital signature is verified with a trading client public key of the trading client.

8. Computer-implemented method according to any of the preceding claim, wherein the digital asset comprises one more of a copyrighted work, a musical piece identified by an international standard recording code, a digital art, an in-game asset of a computer game, a video, an ownership of a physical asset, a financial asset.

9. Computer-implemented method according to any of the preceding claim, wherein the transaction event comprises one or more of a financial transaction, a royalty event, a recurring transaction event.

10. Computer-implemented method according to any of the preceding claim, wherein off the blockchain comprises using a database (218) for storing confidential information.

11. A data processing apparatus (200) comprising one or more processors (210) for carrying out the method according to any of the preceding claim 1-10.

12. A system adapted to cooperate with a blockchain service for processing an NFT transaction from a seller to a buyer, and adapted to cooperate with a trusted party to process a payment related to said NFT transactions, said system and said trusted party being outside the blockchain service, wherein the system comprises the data processing apparatus (200) according to claim 11, and wherein the trusted party is able to authenticate and validate NFT transactions using information relating to the ownership the buyer of the NFT from the blockchain service.

13. A system according to claim 12, wherein the system and the trusted party are a same entity, from which digital assets' owners are able to register, mint NFTs, and receive transaction payment after authentication and validation of their ownership from available information on the blockchain service.

14. A computer program comprising instructions (216) which, when the program is executed by a computer (200), cause the computer (200) to carry out the method of any preceding claim 1-10.
